# EUROPÄISCHE PATENTSCHRIFT

(11) **EP 3 147 635 B1**
(45) Veröffentlichungstag und Bekanntmachung des Hinweises auf die Patenterteilung: **25.12.2019**
(21) Anmeldenummer: 16188105.7
(22) Anmeldetag: 09.09.2016
(51) Int. Cl.: G01F 23/284, G01D 11/30

(54) **SONDENHALTERUNG MIT ABSTANDHALTER**
PROBE HOLDER WITH SPACER
FIXATION DE SONDE ET ECARTEUR

(30) Priorität: 25.09.2015 DE 102015116273
(43) Veröffentlichungstag der Anmeldung: 29.03.2017
(73) Patentinhaber: Krohne S.A.S., 26103 Romans-sur-Isere Cedex (FR)
(72) Erfinder: Pichot, Vincent, 26100 Romans-sur Isère (FR); Peigat, Laurent, 38160 Chevrières (FR)
(74) Vertreter: Gesthuysen Patent- und Rechtsanwälte

(56) Entgegenhaltungen:
- EP-A1- 0 943 902
- EP-A1- 2 527 803
- DE-A1- 10 058 026
- DE-A1-102012 014 267
- US-A1- 2006 225 499
- US-A1- 2009 303 106

## Beschreibung

Die Erfindung betrifft eine Sondenhalterung für ein nach dem Radar-Prinzip arbeitendes Füllstandmessgerät, mit einem Halterungsgehäuse, mit einem Signalleiter zum Leiten von Sende- und/oder Empfangssignalen und mit einem Abstandhalter, wobei der Signalleiter aus dem Innenraum des Halterungsgehäuses durch eine prozessseitige Öffnung des Halterungsgehäuses in den prozessseitigen Außenraum des Halterungsgehäuses geführt ist, wobei der Abstandhalter in der Öffnung des Halterungsgehäuses angeordnet ist und den Signalleiter beabstandet vom Halterungsgehäuse in der Öffnung hält, wobei der Abstandhalter in das Halterungsgehäuse so eingeschrumpft ist, dass im eingeschrumpften Zustand ein dichter Abschluss zwischen dem Halterungsgehäuse und dem Abstandhalter hergestellt ist.

Füllstandmessgeräte, die nach dem Radar-Prinzip arbeiten, werden zur Messung von Füllständen in Behältern wie zum Beispiel Tanks oder Silos verwendet. Häufig zum Einsatz kommen hierbei sogenannte geführte Radarsysteme, die auf dem Prinzip der Time Domain Reflectometry (TDR) basieren; für derartige Geräte sind die eingangs genannten Sondenhalterungen von Interesse. Im Unterschied zu den sogenannten frei abstrahlenden Radarsystemen werden hier elektromagnetische Signale von einer Elektronik erzeugt, in eine Sonde eingekoppelt und entlang der Sonde in Richtung des Mediums, dessen Füllstand ermittelt werden soll, geführt. Die Erstreckung der Sonde definiert den Messbereich des Füllstandmessgeräts. Im Betrieb reicht die Sonde zumindest teilweise in das Medium hinein. Das mit dem Medium in Kontakt kommende Ende der Sonde ist meist als freies Ende ausgestaltet, es kann aber auch am Boden des Behälters fixiert sein. Die über die Sonde geführten Signale werden beim Eintreten in das Medium aufgrund des an der Mediumgrenzfläche vorhandenen Sprungs im Brechungsindex bzw. der Permittivität zumindest teilweise von der Oberfläche des Mediums reflektiert und laufen an der Sonde zurück zu der Elektronik. Aus der Laufzeit zwischen dem Aussenden der elektromagnetischen Signale und dem Empfangen der reflektierten Signale wird der Füllstand des Mediums bestimmt. Als Signale werden zumeist sehr kurze Radioimpulse verwendet.

Das Prinzip der Time Domain Reflectometry ist insbesondere deshalb vorteilhaft, weil die Eigenschaften des Mediums, beispielsweise die Dichte, die Leitfähigkeit und die Dielektrizitätskonstante keinen bzw. kaum Einfluss auf die Messung haben. Auch die Umgebungsbedingungen wie Druck und Temperatur im Prozessraum beeinflussen die Messergebnisse nicht; sich ändernde Umgebungsbedingungen, etwa ein steigender oder ein fallender Umgebungsdruck oder eine steigende oder fallende Umgebungstemperatur, beeinträchtigen die Messgenauigkeit eines TDR-Füllstandmessgerätes nicht. Die Messung mittels des TDR-Prinzips eignet sich ebenfalls zur Bestimmung von Trennschichten und somit zur Angabe zum Einen des Gesamtfüllstands des Mediums und zum Anderen zur Angabe der Trennschichthöhe.

Je nach Anwendungsbereich eignen sich verschiedene Sondenausgestaltungen: Zur Messung des Füllstandes von Flüssigkeiten haben sich Stabsonden oder Koaxialsonden als vorteilhaft erwiesen, wohingegen sich für die Füllstandmessung von Schüttgütern Seilsonden etabliert haben.

Abhängig von der Art des zu vermessenden Mediums oder der Art der Umgebungsbedingungen, also von den in dem Prozessraum herrschenden Bedingungen, können die Füllstandmessgeräte extremen Einflüssen ausgesetzt sein. Zu den extremen Einflüssen zählen beispielsweise sehr hohe Temperaturen oder hohe Drücke. Um das Füllstandmessgerät und insbesondere die Elektronik des Füllstandmessgerätes vor dem Medium und/oder der Umgebung zu schützen, ist es erforderlich, dass die Schnittstelle zwischen dem Füllstandmessgerät und dem Prozessraum, also beispielsweise dem mit dem Medium gefüllten Behälter, abgedichtet ist. Ebenfalls kann es erforderlich sein, dass diese Schnittstelle explosionsschutzbedingt druckfest und/oder diffusionsdicht ausgestaltet werden muss.

Die Sonden als Führungselement für die elektromagnetische Strahlung verbinden prinzipbedingt den Prozessraum mit seinen zum Teil sehr rauen physikalischen Randbedingungen mit im Gehäuse des Messgeräts vorhandenen Bereichen, die beispielsweise empfindliche Elektronikkomponenten beherbergen, die zur Erzeugung und Einkopplung der Radarsignale dienen und die auch zum Empfang und zur Auswertung der elektromagnetischen Reflexionssignale eingerichtet sind. Es stellt sich insoweit immer die Frage nach einer wirksamen physikalischen Abgrenzung der verschiedenen Bereiche, die von der Sonde durchlaufen werden, wobei der Sondenhalterung, die in unmittelbarem Kontakt mit der Sonde ist, eine besondere Bedeutung zukommt. Sondenhalterungen haben zum einen die Aufgabe, die Sonde sicher festzuhalten, insbesondere so, dass die über die Sonde geführte elektromagnetische Strahlung möglichst ungestört passieren kann, insbesondere ohne störende Reflexionen, zum anderen müssen an und in Sondenhalterungen auch Barrieren realisiert werden zur Abschottung des Gehäuseinnenraums gegenüber dem Prozessraum. Es sind Lösungen bekannt, die meist mit einer Mehrzahl von Dichtungen und Verschraubungen arbeiten, teils auch mit unlösbaren materialschlüssigen Verbindungen, was nicht selten zu sehr aufwändigen Konstruktionen und Montagevorgängen führt, manchmal den Nachteil mit sich bringt, dass zusammengefügte Komponenten zwecks Wartung oder Fehlersuche nicht mehr demontierbar sind, jedenfalls nicht zerstörungsfrei.

Aus der DE 10 2012 014 267 A1 ist eine Sondenhalterung mit einem Halterungsgehäuse bekannt. Ein Signalleiter ist durch eine prozessseitige Öffnung des Gehäuses geführt. In der Öffnung ist ein als Abstandhalter fungierender Wandabschnitt angeordnet, der den Signalleiter beabstandet von dem Gehäuse hält.

Aus der WO 2010/105654 A1 ist eine Sondenhalterung mit einem Halterungsgehäuse bekannt, bei der ein Signalleiter durch eine prozessseitige Öffnung des Gehäuses geführt ist. In der Öffnung ist ein Abstandhalter angeordnet, der den Signalleiter beabstandet von dem Gehäuse hält. Um einen dichtenden Abschluss zwischen dem Halterungsgehäuse und dem Abstandhalter zu realisieren, ist der Abstandhalter in das Halterungsgehäuse eingeschrumpft.

Aus der EP 0 943 902 A1 ist ein Mikrowellen-Füllstandmessgerät mit einem gefüllten Hohlleiter bekannt. Die Hohlleiterfüllung und der Hohlleitermantel sind miteinander verpresst. Zusätzlich ist ein Ring an der Verpressstelle von Hohlleiterfüllung und Hohlleitermantel angeordnet, der aus einem thermisch dehnungsarmen Material hergestellt ist. Der Ring dient dazu, im Falle einer auftretenden Temperaturerhöhung die Verpressstelle zu fixieren, da er sich aufgrund seines Materials nicht oder nur wenig ausdehnt.

Die Aufgabe der Erfindung ist es, einen Sondenhalter anzugeben, der auf einfache, aber effektive Weise eine Abdichtung gegenüber dem Prozessraum realisiert.

Die zuvor genannte und hergeleitete Aufgabe ist dadurch gelöst, dass zwischen dem Halterungsgehäuse und dem Abstandhalter mindestens eine Dichtung angeordnet ist, wobei die Dichtung als zusätzliche separate Dichtung zwischen sich gegenüberstehenden Flächen von Halterungsgehäuse und Abstandhalter angeordnet ist, die durch das Einschrumpfen nicht kraftbeaufschlagt und aufeinandergepresst sind.

Der Abstandhalter ist so in das Halterungsgehäuse eingeschrumpft, dass im eingeschrumpften Zustand ein dichter Abschluss zwischen dem Halterungsgehäuse und dem Abstandhalter hergestellt ist. So wird auf sehr einfache Art und Weise ein dichter Abschluss zwischen dem Halterungsgehäuse und dem Abstandhalter ohne die Verwendung von Dichtelementen realisiert. Das hat den Vorteil, dass - da auf separate Dichtelemente vollkommen verzichtet werden kann - kein Verschleiß und keine Abnutzen von Dichtelementen stattfinden kann, wodurch eine Dichtwirkung beeinträchtigt werden könnte. Zudem ist die vorliegende Dichtung wartungsfrei, es entfällt zudem ein durch zusätzliche Teile erhöhter Montageaufwand. Ferner müssen Abstandhalter und Halterungsgehäuse nicht für die Aufnahme von separaten Dichtungen vorbereitet werden, wie beispielsweise durch das Einbringen von Nuten.

Wenn von einem dichten Abschluss die Rede ist, dann ist abhängig von den Prozessraumbedingungen, was darunter zu verstehen ist. Ein dichter Abschluss ist ein solcher, der staubdicht und/oder flüssigkeitsdicht und/oder gasdicht realisiert ist. Mit dem erfindungsgemäß in das Halterungsgehäuse eingeschrumpften Abstandhalter lassen sich ohne Weiteres Dichtungen realisieren, die beispielsweise auch normgemäße Anforderungen des Explosionsschutzes erfüllen.

Erfindungsgemäß ist vorgesehen, dass zwischen dem Halterungsgehäuse und dem Abstandhalter mindestens eine Dichtung angeordnet ist. Die Dichtung ist zwischen sich gegenüberstehenden Flächen von Halterungsgehäuse und Abstandhalter angeordnet, die durch das Einschrumpfen nicht kraftbeaufschlagt und aufeinandergepresst sind. Das hat den Vorteil, dass die Dichtung beim Einschrumpfen nicht thermisch belastet wird, da sie mit einer erhitzten Oberfläche nicht zwingend in Kontakt geraten muss. Das ist bevorzugt auch deshalb realisiert, damit die Dichtung das eigentliche Einschrumpfen, insbesondere die durch das Einschrumpfen hergestellte Dichtung, nicht behindert. Die Dichtung befindet sich also nicht im Bereich des durch das Einschrumpfen hergestellten Dichtkontakts zwischen dem Halterungsgehäuse und dem Abstandhalter. Insbesondere ist die Dichtung an dem gehäuseinnenseitigen Ende des Abstandhalters angebracht, d. h. an einer Fläche des Abstandhalters, die in den Innenraum des Halterungsgehäuses weist.

Die Anordnung dieser zusätzlichen, separaten Dichtung ist vor allem dann von Vorteil, wenn bei einer besonderen thermischen Belastung des Füllstandmessgerätes die Einschrumpfung gelockert oder gänzlich aufgehoben wird. Treten unvorhergesehene Zustandsänderungen im Prozessraum ein, beispielsweise eine starke Temperaturerhöhung, und liegt die maximale Temperatur oberhalb einer kritischen Temperatur, derart, dass sich das Halterungsgehäuse ausdehnt, kann das dazu führen, dass der Abstandhalter nicht mehr ideal eingeschrumpft in das Halterungsgehäuse ist und dadurch die zuvor erzielte Dichtigkeit aufgehoben wird. Um trotzdem ein Eindringen des Mediums in das Füllstandmessgerät oder ein Wirken der Prozessraumbedingungen auf das Füllstandmessgerät, insbesondere die Elektronik des Füllstandmessgerätes, zu vermeiden, ist die zusätzliche Dichtung vorgesehen.

Bevorzugt ist die Dichtung als Graphit-Dichtung ausgestaltet, insbesondere als ein Graphit-Dichtring. Ebenfalls vorteilhaft ist eine Dichtung, die als Gold-Dichtung ausgestaltet ist, insbesondere als Gold-Dichtring. In einer weiteren bevorzugten Ausgestaltung sind mehrere Dichtungen realisiert, insbesondere zwei Dichtungen, wobei eine Dichtung als Graphit-Dichtring ausgestaltet ist und eine weitere Dichtung als Gold-Dichtring.

Eine weitere bevorzugte Ausgestaltung der erfindungsgemäßen Sondenhalterung ist dadurch gekennzeichnet, dass das Halterungsgehäuse prozessraumseitig mindestens einen Steg aufweist, dass der Steg die Öffnung zur Aufnahme des Abstandhalters zumindest teilweise umrandet und dass der Steg derart geformt ist, dass er den Abstandhalter prozessseitig einfasst.

Diese Ausgestaltung ist insbesondere auch in dem Fall vorteilhaft, in dem durch sich ändernde Umgebungsbedingungen, insbesondere Prozessraumbedingungen, das Halterungsgehäuse derart erwärmt wird, dass es sich so weit ausdehnt, dass der Abstandhalter nicht mehr im eingeschrumpften Zustand ist. Je nach Grad der Ausdehnung des Halterungsgehäuses kann sogar der Fall eintreten, dass der Abstandhalter nicht mehr von dem Halterungsgehäuse gehalten wird und aus der prozessseitigen Öffnung des Halterungsgehäuses gleitet. Durch den Steg, der die Öffnung umrandet, wird das Entgleiten des Abstandhalters verhindert, da dieser durch den Steg gehalten wird. Für den Fall, dass eine Dichtung an dem gehäuseinnenseitigen Ende bzw. an einer in den Innenraum des Halterungsgehäuses weisenden Fläche des Abstandhalters angebracht ist, bleibt durch das Zusammenspiel des Steges und der Dichtung ein dichter Abschluss zwischen dem Abstandhalter und dem Halterungsgehäuse erhalten.

Der Steg kann auf verschiedene Arten realisiert sein. In einer Ausgestaltung ist der Steg derart ausgestaltet, dass er die Öffnung zur Aufnahme des Abstandhalters vollständig umrandet und den Abstandhalter vollständig einfasst. Ebenfalls denkbar ist eine Ausgestaltung derart, dass eine Mehrzahl an Stegen vorgesehen ist, wobei jeder Steg die Öffnung nur teilweise umgrenzt. Beispielsweise können zwei sich gegenüberliegende Stege vorgesehen sein. Bei einer Mehrzahl von Stegen sind die Stege bevorzugt gleichmäßig über den Umfang der Öffnung verteilt angeordnet.

Der Steg oder die Stege sind so geformt, dass er den Abstandhalter einfasst bzw. dass sie den Abstandhalter einfassen. Das kann beispielsweise dadurch realisiert sein, dass der Steg/die Stege nach dem Einschrumpfen des Abstandhalters in Richtung auf den Abstandhalter gebogen wird/werden.

Bisher ist ein dichter Abschluss zwischen dem Abstandhalter und dem Halterungsgehäuse behandelt worden. Bei der in Rede stehenden Sondenhalterung ist der Signalleiter aus dem Innenraum des Halterungsgehäuses durch die prozessseitige Öffnung des Halterungsgehäuses in den prozessseitigen Außenraum des Halterungsgehäuses geführt, wobei der Abstandhalter in der Öffnung des Halterungsgehäuses angeordnet ist. Um die Sondenhalterung vollständig gegenüber dem Prozessraum abzudichten, ist eine besonders bevorzugte Ausgestaltung der erfindungsgemäßen Sondenhalterung dadurch gekennzeichnet, dass im eingeschrumpften Zustand der Abstandhalter derart komprimiert ist, dass der Signalleiter im Abstandhalter eingequetscht ist, so dass ein dichter Abschluss zwischen dem Signalleiter und dem Abstandhalter hergestellt ist. Durch diese Ausgestaltung der Sondenhalterung ist eine vollständige Abdichtung gegenüber dem Prozessraum ganz ohne weitere Hilfsmittel bzw. verschleißbehaftete Teile realisiert.

Alternativ oder zusätzlich ist bei einer weiteren Ausgestaltung der Sondenhalterung vorgesehen, dass der Abstandhalter auf den Signalleiter aufgeschrumpft ist. Ob dies sinnvoll möglich ist, ob also die temperaturabhängige Materialdehnung bzw. -kontraktion hinreichend groß ist, hängt vom Material des Abstandhalters ab. Gleichwohl können auch kleine Schrumpfeffekte genutzt werden, um ein resultierendes dichtes Aufpressen des Abstandhalters auf den Signalleiter zu unterstützen. Durch die Kombination beider Maßnahmen kann bewirkt werden, dass die durch das Einschrumpfen des Abstandhalters in das Halterungsgehäuse radial auf den Umfang des Abstandhalters wirkende Kraft und die durch thermische Behandlung des Abstandhalters bewirkte Kontraktion des Abstandhalters gemeinsam zu einem dichten Abschluss zwischen Abstandhalter und Signalleiter führen.

Wenn davon die Rede ist, dass die Sondenhalterung einen Signalleiter umfasst, dann muss das nicht die eigentliche Sonde sein. Vielmehr kann der Signalleiter als verbindendes Element zwischen der die Signale erzeugenden Elektronik und der die Signale in den Prozessraum führenden Sonde sein. Dann müssen die Signale von dem Signalleiter in die Sonde eingekoppelt werden. Eine bevorzugte Ausgestaltung der erfindungsgemäßen Sondenhalterung ist dadurch gekennzeichnet, dass ein Adapter prozessraumseitig mit dem Signalleiter verbunden ist und zur Anschluss einer Sonde dient. Die Verbindung zwischen dem Signalleiter und dem Adapter kann auf verschiedene Art und Weise realisiert sein. In einer bevorzugten Ausgestaltung ist die Verbindung zwischen dem Signalleiter und dem Adapter dadurch realisiert, dass der Signalleiter ein Gewinde aufweist, dass der Adapter ein korrespondierendes Gegengewinde aufweist und dass der Adapter mit dem Signalleiter verschraubt ist. So kann die Verbindung auf sehr einfache Weise hergestellt und wieder gelöst werden. Die Sonde ist mit dem Adapter verbunden. Das kann beispielsweise dadurch realisiert sein, dass der Adapter und die Sonde einteilig ausgestaltet sind, nämlich indem das der Sondenhalterung zugewandte Ende der Sonde als Adapter ausgestaltet ist.

Eine weitere Ausgestaltung der erfindungsgemäßen Sondenhalterung ist dadurch gekennzeichnet, dass der Adapter und der Signalleiter derart miteinander verbunden sind, dass der Adapter und der Abstandhalter zumindest eine mittelbare Kontaktfläche ausbilden und dass zwischen dem Adapter und dem Abstandhalter eine Dichtung angeordnet ist. Sind der Signalleiter und der Adapter miteinander verschraubt, dann wird durch das Festschrauben eine Dichtwirkung erzielt.

Eine bevorzugte Ausgestaltung der erfindungsgemäßen Sondenhalterung ist dadurch gekennzeichnet, dass das Halterungsgehäuse und der Signalleiter aus einem Metall bestehen. Dabei können das Halterungsgehäuse und der Signalleiter aus dem gleichen metallischen Material gefertigt sein. Das Halterungsgehäuse kann auch aus einem ersten Metall bestehen und der Signalleiter aus einem zweiten Metall. Eine weitere Ausgestaltung ist dadurch gekennzeichnet, dass der Abstandhalter aus einem Isolator besteht.

Bevorzugt ist der Signalleiter aus einem Metall mit einem niedrigen thermischen Expansionskoeffizienten und einer hohen mechanischen Belastbarkeit gefertigt. Hierzu bietet sich insbesondere Molybdän an. Für das Halterungsgehäuse wird bevorzugt ein Metall mit einem hohen thermischen Expansionskoeffizienten, insbesondere einem höheren Expansionskoeffizienten als dem des für den Signalleiter verwendeten Metalls, verwendet. Beispielsweise bietet sich hier die Verwendung von Nickellegierungen, Titan oder Edelstahl an. Für den Abstandhalter bietet sich die Verwendung einer Keramik, wie beispielsweise Aluminiumoxid, oder einer Plastik, wie beispielsweise PEEK oder PTFE an.

Die Sondenhalterung selbst kann beispielsweise über einen Flansch an der den Prozessraum umgebenden Wandung befestigt werden.

Im Einzelnen gibt es nun verschiedene Möglichkeiten, die erfindungsgemäße Sondenhalterung auszugestalten und weiterzubilden. Dazu wird verwiesen sowohl auf die dem Patentanspruch 1 nachgeordneten Patentansprüche als auch auf die Beschreibung bevorzugter Ausführungsbeispiele in Verbindung mit der Zeichnung. In der Zeichnung zeigen
- Fig. 1: eine erste Ausgestaltung einer Sondenhalterung,
- Fig. 2: eine zweite Ausgestaltung einer Sondenhalterung und
- Fig. 3: eine dritte Ausgestaltung einer Sondenhalterung.

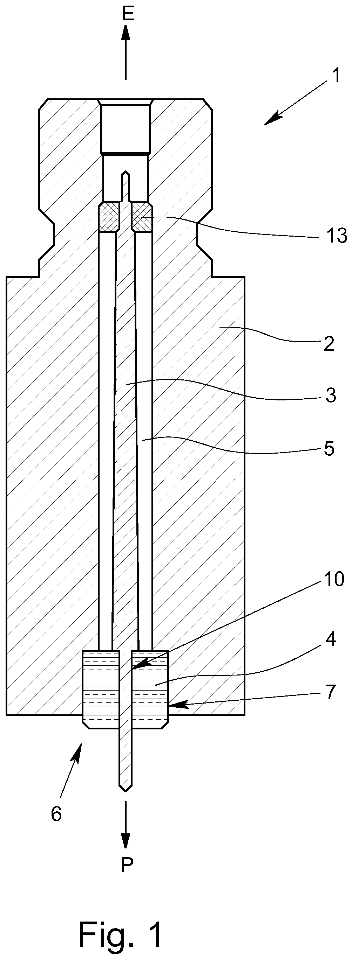

In Fig. 1 dargestellt ist eine Sondenhalterung 1 für ein nach dem Radar-Prinzip arbeitendes Füllstandmessgerät. Diese Ausgestaltung fällt nicht unter den Gegenstand des Anspruchs 1, da sie nicht die erfindungsgemäße zusätzliche Dichtung realisiert, sie zeigt jedoch Merkmale der Erfindung gemäß den abhängigen Ansprüchen. Sondenhalterung 1 umfasst ein Halterungsgehäuse 2 und einen Signalleiter 3. Der Signalleiter 3 ist aus dem Innenraum 5 des Halterungsgehäuses 2 durch eine prozessseitige Öffnung 6 des Halterungsgehäuses 2 in den prozessseitigen Außenraum geführt. Der prozessseitige Außenraum ist nicht in Form eines abgeschlossenen Prozessraumes dargestellt, jedoch durch den mit P bezeichneten Pfeil verdeutlicht.

Der Signalleiter 3 dient zum Leiten von Sende- und/oder Empfangssignalen, wobei ein Sendesignal von einer nicht dargestellten Elektronik erzeugt wird und elektronikseitig - verdeutlicht durch den mit E bezeichneten Pfeil - in den Signalleiter 3 eingekoppelt wird. Ein Empfangssignal wird prozessraumseitig in den Signalleiter 3 eingekoppelt und zu einer eine Auswerteeinheit realisierenden Elektronik geleitet. Um die Signale leiten zu können, besteht der Signalleiter 3 aus einem Metall.

Das Halterungsgehäuse 2 ist ebenfalls aus einem Metall gefertigt. Damit der Signalleiter 3 nicht in Kontakt mit dem Halterungsgehäuse 2 kommt, ist ein Abstandhalter 4 in der Öffnung 6 angeordnet, der den Signalleiter 3 beabstandet von dem Halterungsgehäuse 2 hält. Der Abstandhalter 4 besteht aus einem Isolator.

Am elektronikseitigen Ende des Signalleiters 3 wird der Signalleiter 3 durch einen zweiten Isolator 13 auf Abstand zu dem Halterungsgehäuse 2 gehalten.

Im Bereich des Abstandhalters 4 und des Isolators 13 ist der Signalleiter 3 verjüngt. Die verjüngten Enden des Signalleiters 3 sind durch Ausnehmungen durch den Abstandhalter 4 und den Isolator 13 geführt, so dass der Abstandhalter 4 und auch der Isolator 13 den Signalleiter 3 umgreifen und der Signalleiter 3 in dem Halterungsgehäuse 2 gelagert ist.

Um die Elektronik vor dem zu vermessenden Medium zu schützen, bzw. um die Elektronik vor den Prozessraumbedingungen zu schützen, muss der die Elektronik beherbergende Gehäuseinnenraum gegenüber dem Prozessraum P abgedichtet werden. Das wird dadurch realisiert, dass der Abstandhalter 4 in das Halterungsgehäuse 2 so eingeschrumpft ist, dass im eingeschrumpften Zustand ein dichter Abschluss 7 zwischen dem Halterungsgehäuse 2 und dem Abstandhalter 4 hergestellt ist. So ist auf sehr einfache Weise eine wartungsfreie Dichtung realisiert - wartungsfrei deshalb, weil keine verschleißanfälligen Hilfsmittel wie Dichtungsringe oder ähnliches zum Einsatz kommen, die eine begrenzte Lebensdauer aufweisen.

Die in Fig. 1 dargestellte Sondenhalterung 1 zeichnet sich weiter dadurch aus, dass im eingeschrumpften Zustand der Abstandhalter 4 derart komprimiert ist, dass der Signalleiter 3 im Abstandhalter 4 eingequetscht ist, so dass ein dichter Abschluss 10 zwischen dem Signalleiter 3 und dem Abstandhalter 4 hergestellt ist. Auf diese Weise ist die Sondenhalterung 1 vollständig zum Prozessraum P hin abgedichtet.

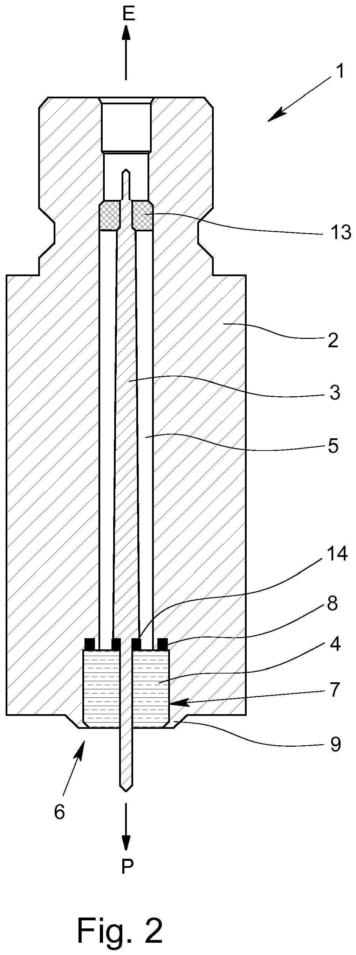

In Fig. 2 ist eine weitere Ausgestaltung einer Sondenhalterung 1 dargestellt. Gleiche Bezugszeichen bezeichnen gleiche Elemente. Die in Fig. 2 dargestellte Sondenhalterung 1 unterscheidet sich von der in Fig. 1 dargestellten Sondenhalterung 1 dadurch, dass der Signalleiter 3 im eingeschrumpften Zustand des Abstandhalters 4 in das Halterungsgehäuse 2 nicht eingequetscht ist. Um dennoch einen dichten Abschluss der Sondenhalterung 1 zum Prozessraum P zu realisieren, ist eine Dichtung 14 zwischen dem Signalleiter 3 und dem Abstandhalter 4 angeordnet. Des Weiteren weist das Halterungsgehäuse 2 prozessseitig einen Steg 9 auf. Der Steg 9 umrandet die Öffnung 6 zur Aufnahme des Abstandhalters 4 vollständig und ist so geformt, dass er den Abstandhalter 4 prozessseitig einfasst. Nicht dargestellt, jedoch auch bevorzugt, ist eine Ausgestaltung, bei der der Steg 9 die Öffnung 6 zur Aufnahme des Abstandhalters 4 nicht vollständig, jedoch zumindest teilweise umrandet. Der Steg 9 ist dann beispielsweise als Nase ausgebildet, wobei mehrere solcher Nasen vorgesehen sein können. Der Steg 9 hält den Abstandhalter 4 in dem Fall, dass der eingeschrumpfte Zustand des Abstandhalters 4 aufgrund von unvorhersehbaren Änderungen der Prozessbedingungen oder anderen Störungen aufgehoben wird. Da in diesem Fall ebenfalls die Dichtwirkung der Einschrumpfung aufgehoben oder geschwächt wird, ist eine Dichtung 8 zwischen dem Halterungsgehäuse 2 und dem Abstandhalter 4 an dem gehäuseinnenseitigen Ende des Abstandhalters 4 angeordnet. Die Dichtung 8 ist als Graphit-Dichtung realisiert.

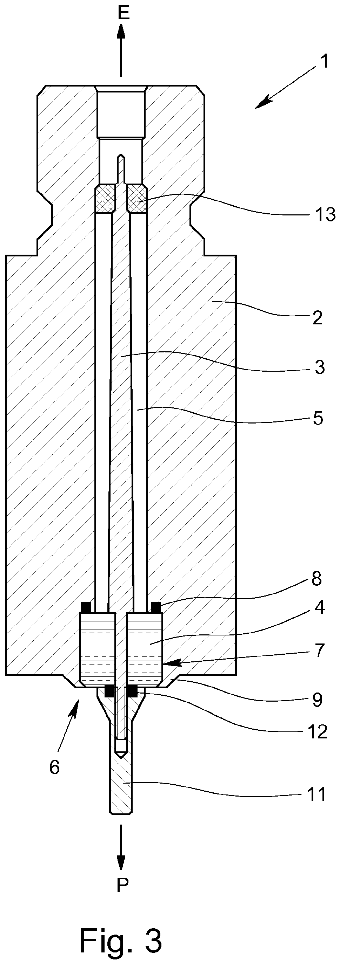

Fig. 3 zeigt eine weitere Ausgestaltung einer Sondenhalterung 1. Auch hier haben gleiche Elemente die gleichen Bezugszeichen. Bei der dargestellten Sondenhalterung 1 ist ein dichter Abschluss 7 zwischen dem Halterungsgehäuse 2 und dem Abstandhalter 4 im eingeschrumpften Zustand des Abstandhalters 4 realisiert. Zur absoluten Sicherung weist das Halterungsgehäuse 2 prozessseitig einen Steg 9 auf, der die Öffnung 6 zur Aufnahme des Abstandhalters 4 vollständig umrandet und so gebogen ist, dass er den Abstandhalter 4 einfasst. Eine Dichtung 8 befindet sich zwischen dem Halterungsgehäuse 2 und dem Abstandhalter 4 an dem gehäuseinnenseitigen Ende des Abstandhalters. Prozessraumseitig ist ein Adapter 11 mit dem Signalleiter 3 verbunden, der zur Aufnahme einer nicht dargestellten Sonde dient. Der Signalleiter 3 weist ein Gewinde auf, der Adapter 11 weist ein korrespondierendes Gegengewinde auf und der Adapter 11 ist mit dem Signalleiter 3 verschraubt. Zwischen dem Adapter 11 und dem Abstandhalter 4 ist eine Dichtung 12 angeordnet, um einen dichten Abschluss zu realisieren. Die Dichtung 12 erzielt ihre Dichtwirkung durch das Zusammenschrauben des Adapters 13 und des Signalleiters 3, wodurch die Dichtung 12 zwischen dem Abstandhalter 4 und dem Adapter 11 gehalten wird.

## Patentansprüche

1. Sondenhalterung (1) für ein nach dem Radar-Prinzip arbeitendes Füllstandmessgerät, mit einem Halterungsgehäuse (2), mit einem Signalleiter (3) zum Leiten von Sende- und/oder Empfangssignalen und mit einem Abstandhalter (4), wobei der Signalleiter (3) aus dem Innenraum (5) des Halterungsgehäuses (2) durch eine prozessseitige Öffnung des Halterungsgehäuses in den prozessseitigen Außenraum des Halterungsgehäuses (2) geführt ist, wobei der Abstandhalter (4) in der Öffnung (6) des Halterungsgehäuses (2) angeordnet ist und den Signalleiter (3) beabstandet vom Halterungsgehäuse (2) in der Öffnung (6) hält,
wobei der Abstandhalter (4) in das Halterungsgehäuse (2) so eingeschrumpft ist, dass im eingeschrumpften Zustand ein dichter Abschluss (7) zwischen dem Halterungsgehäuse (2) und dem Abstandhalter (4) hergestellt ist,
**dadurch gekennzeichnet,**
**dass** zwischen dem Halterungsgehäuse (2) und dem Abstandhalter (4) mindestens eine Dichtung (8) angeordnet ist, wobei die Dichtung (8) als zusätzliche separate Dichtung zwischen sich gegenüberstehenden Flächen von Halterungsgehäuse (2) und Abstandhalter (4) angeordnet ist, die durch das Einschrumpfen nicht kraftbeaufschlagt und aufeinandergepresst sind.

2. Sondenhalterung (1) nach Anspruch 1, **dadurch gekennzeichnet, dass** die Dichtung (8) an dem gehäuseinnenseitigen Ende des Abstandhalters (4) angebracht ist, insbesondere wobei die Dichtung (8) als Graphit-Dichtung und/oder als Gold-Dichtung ausgestaltet ist.

3. Sondenhalterung (1) nach einem der Ansprüche 1 und 2, **dadurch gekennzeichnet, dass** das Halterungsgehäuse (2) prozessseitig mindestens einen Steg (9) aufweist, dass der Steg (9) die Öffnung (6) zur Aufnahme des Abstandhalters (4) zumindest teilweise umrandet und dass der Steg (9) derart geformt ist, dass er den Abstandhalter (4) (prozessseitig) einfasst.

4. Sondenhalterung (1) nach einem der Ansprüche 1 bis 3, **dadurch gekennzeichnet, dass** im eingeschrumpften Zustand der Abstandhalter (4) derart komprimiert ist, dass der Signalleiter (3) im Abstandhalter (4) eingequetscht ist, so dass ein dichter Abschluss (10) zwischen dem Signalleiter (3) und dem Abstandhalter (4) hergestellt ist.

5. Sondenhalterung (1) nach einem der Ansprüche 1 bis 4, **dadurch gekennzeichnet, dass** der Abstandhalter (4) auf den Signalleiter (3) aufgeschrumpft ist, so dass ein dichter Abschluss (10) zwischen dem Signalleiter (3) und dem Abstandhalter (4) hergestellt ist.

6. Sondenhalterung (1) nach einem der Ansprüche 1 bis 5, **dadurch gekennzeichnet, dass** ein Adapter (11) prozessraumseitig mit dem Signalleiter (3) verbunden ist und zur Aufnahme einer Sonde dient.

7. Sondenhalterung (1) nach Anspruch 6, **dadurch gekennzeichnet, dass** der Signalleiter (3) ein Gewinde aufweist, dass der Adapter (11) ein korrespondierendes Gegengewinde aufweist und dass der Adapter (11) mit dem Signalleiter (3) verschraubt ist.

8. Sondenhalterung (1) nach einem der Ansprüche 6 oder 7, **dadurch gekennzeichnet, dass** der Adapter (11) und der Signalleiter (3) derart miteinander verbunden sind, dass der Adapter (11) und der Abstandhalter (3) zumindest eine mittelbare Kontaktfläche ausbilden und dass zwischen dem Adapter (11) und dem Abstandhalter (3) eine Dichtung (12) angeordnet ist.

9. Sondenhalterung (1) nach einem der Ansprüche 1 bis 8, **dadurch gekennzeichnet, dass** das Halterungsgehäuse (2) und der Signalleiter (3) aus einem Metall bestehen.

10. Sondenhalterung (1) nach einem der Ansprüche 1 bis 9, **dadurch gekennzeichnet, dass** der Abstandhalter (4) aus einem Isolator besteht.

## Claims

1. Probe holder (1) for a fill level measuring device operating with the radar principle having a holder housing (2), having a signal conductor (3) for guiding emitted and/or received signals and having a spacer (4), wherein the signal conductor (3) is led out of the interior space (5) of the holder housing (2) through a process-side opening of the holder housing (2) into the process side exterior space of the holder housing (2), wherein the spacer (4) is arranged in the opening (6) of the holder housing (2) and keeps the signal conductor (3) spaced from the holder housing (2) in the opening (6), wherein the spacer (4) is shrunk in the holder housing (2) so that a sealed closure (7) is created between the holder housing (2) and the spacer (4) in the shrunken state
**characterized in**
**that** at least one seal (8) is arranged between the holder housing (2) and the spacer (4), wherein the seal (8) is arranged as an additional separate seal between opposing surfaces of the holder housing (2) and the spacer (4), which are not subjected to force due to shrinkage and are pressed against one another.

2. Probe holder (1) according to claim 1, **characterized in that** the seal (8) is affixed at the end of the spacer (4) on the housing side, in particular wherein the seal (8) is designed as a graphite seal or a gold seal.

3. Probe holder (1) according to claim 1 or 2, **characterized in that** the holder housing (2) has at least one bar (9) on the process side, that the bar (9) at least partially borders the opening (6) for receiving the spacer (4) and that the bar (9) is formed such that it surrounds the spacer (4) (on the process side).

4. Probe holder (1) according to any one of claims 1 to 3, **characterized in that** the spacer (4) in the shrunken state is compressed such that the signal conductor (3) is pressed in the spacer (4) so that a sealed closure (10) is created between the signal conductor (3) and the spacer (4).

5. Probe holder (1) according to any one of claims 1 to 4, **characterized in that** the spacer (4) is shrunk onto the signal conductor (3) so that a sealed closure (10) is created between the signal conductor (3) and the spacer (4).

6. Probe holder (1) according to any one of claims 1 to 5, **characterized in that** an adapter (11) is connected to the signal conductor (3) on the process side and is used for receiving a probe.

7. Probe holder (1) according to claim 6, **characterized in that** the signal conductor (3) has a thread, that the adapter (11) has a corresponding counterthread, and that the adapter (11) is screwed to the signal conductor (3).

8. Probe holder (1) according to claim 6 or 7, **characterized in that** the adapter (11) and the signal conductor (3) are connected to one another such that the adapter (11) and the spacer (4) form at least an indirect contact surface and that a seal (12) is arranged between the adapter (11) and the spacer (4).

9. Probe holder (1) according to any one of claims 1 to 8, **characterized in that** the holder housing (2) and the signal conductor (3) consist of a metal.

10. Probe holder (1) according to any one of claims 1 to 9, **characterized in that** the spacer (4) consists of an insulator.

## Revendications

1. Support de sonde (1) destiné à un appareil de mesure de niveau fonctionnant sur le principe du radar, le support de sonde comprenant un boîtier (2), un conducteur de signal (3) destiné à la conduction de signaux d'émission et/ou de réception et un élément d'espacement (4), le conducteur de signal (3) étant guidé depuis l'espace intérieur (5) du boîtier (2) à travers une ouverture côté processus du boîtier jusque dans l'espace extérieur côté processus du boîtier (2), l'élément d'espacement (4) étant disposé dans l'ouverture (6) du boîtier (2) et maintenant le conducteur de signal (3) à distance du boîtier (2) dans l'ouverture (6), l'élément d'espacement (4) étant rétractée dans le boîtier (2) de manière à formé, à l'état rétracté, une fermeture étanche (7) entre le boîtier (2) et l'élément d'espacement (4),
**caractérisé en ce que**
au moins une garniture d'étanchéité (8) est disposée entre le boîtier (2) et l'élément d'espacement (4), la garniture d'étanchéité (8) étant disposée en tant que garniture d'étanchéité séparé supplémentaire entre des surfaces opposées du boîtier (2) et de l'élément d'espacement (4), lesquelles ne sont pas comprimée l'une sur l'autre ou soumise à une force à cause de la rétraction.

2. Support de sonde (1) selon la revendication 1, **caractérisé en ce que** la garniture d'étanchéité (8) est monté à l'extrémité côté intérieur du boîtier de l'élément d'espacement (4), en particulier la garniture d'étanchéité (8) étant conçue comme une garniture d'étanchéité en graphite et/ou une garniture d'étanchéité en or.

3. Support de sonde (1) selon l'une des revendications 1 et 2, **caractérisé en ce que** le boîtier (2) comporte côté processus au moins une nervure (9), **en ce que** la nervure (9) borde au moins partiellement l'ouverture (6) destinée à recevoir l'élément d'espacement (4) et **en ce que** la nervure (9) est formé de manière à entourer l'élément d'espacement (4) (côté processus).

4. Support de sonde (1) selon l'une des revendications 1 à 3, **caractérisé en ce que**, à l'état rétracté, l'élément d'espacement (4) est comprimée de telle sorte que le conducteur de signal (3) soit pincé dans l'élément d'espacement (4) de manière à réaliser une fermeture étanche (10) entre le conducteur de signal (3) et l'élément d'espacement (4).

5. Support de sonde (1) selon l'une des revendications 1 à 4, **caractérisé en ce que** l'élément d'espacement (4) est rétractée sur le conducteur de signal (3) de façon à réaliser qu'une fermeture étanche (10) entre le conducteur de signal (3) et l'élément d'espacement (4).

6. Support de sonde (1) selon l'une des revendications 1 à 5, **caractérisé en ce qu'**un adaptateur (11) est relié côté chambre de processus au conducteur de signal (3) et sert à recevoir une sonde.

7. Support de sonde (1) selon la revendication 6, **caractérisé en ce que** le conducteur de signal (3) comporte un filetage, **en ce que** l'adaptateur (11) comporte un filetage homologue correspondant et **en ce que** l'adaptateur (11) est vissé au conducteur de signal (3) .

8. Support de sonde (1) selon l'une des revendications 6 ou 7, **caractérisé en ce que** l'adaptateur (11) et le conducteur de signal (3) sont reliés l'un à l'autre de manière à ce que l'adaptateur (11) et l'élément d'espacement (3) forment au moins une surface de contact indirecte et **en ce qu'**une garniture d'étanchéité (12) est disposée entre l'adaptateur (11) et l'élément d'espacement (3).

9. Support de sonde (1) selon l'une des revendications 1 à 8, **caractérisé en ce que** le boîtier (2) et le conducteur de signal (3) sont en métal.

10. Support de sonde (1) selon l'une des revendications 1 à 9, **caractérisé en ce que** l'élément d'espacement (4) est formé d'un isolant.
